# EUROPÄISCHE PATENTANMELDUNG

(11) **EP 3 035 500 A1**
(43) Veröffentlichungstag der Anmeldung: **22.06.2016**
(21) Anmeldenummer: 14198841.0
(22) Anmeldetag: 18.12.2014
(51) Int. Cl.: H02K 3/12, H02K 3/28, H02K 7/18

(54) **Statorsegment für einen hohlzylinderförmigen, segmentierten Stator einer elektrischen Maschine**

(71) Anmelder: Siemens Aktiengesellschaft, 80333 München (DE)
(72) Erfinder: Sabelfeld, Ilja, 10119 Berlin (DE); Centner, Matthias, 10555 Berlin (DE); Festa, Marco, 14612 Falkensee (DE)

(57) **Zusammenfassung**

Die Erfindung betrifft Statorsegment für einen hohlzylinderförmigen, segmentierten Stator einer elektrischen Maschine, wobei das Statorsegment ein Segmentblechpaket (1) aufweisend einen ersten Randabschnitt (2) und einen zweiten Randabschnitt (3), welcher jeweils an einer Segmentgrenze (4) zum jeweils benachbarten Statorsegment angeordnet ist, und einen Mittelabschnitt (5), welcher zwischen dem ersten Randabschnitt (2) und dem zweiten Randabschnitt (3) angeordnet ist, und Spulen aufweist, welche jeweils zumindest einen Nutabschnitt aufweisen, wobei das Segmentblechpaket (1) in axialer Richtung verlaufende und nach radial innen offene Nuten (6) aufweist, welche in Umfangsrichtung versetzt zueinander angeordnet sind, wobei die jeweilige Nut (6) derart ausgestaltet ist, dass in ihr zwei Nutabschnitte in radialer Richtung übereinander anordenbar sind, von denen der radial innen angeordnete Nutabschnitt als Oberstab (7) und der radial außen angeordnete Nutabschnitt als Unterstab (8) fungieren, wobei die Spulen erste Spulen (9) umfassen, welche jeweils zwei erste Nutabschnitte (10) und zwei Wickelkopfabschnitte (11) aufweisen, wobei die beiden ersten Nutabschnitte (10) der jeweiligen ersten Spule (9) an der jeweiligen axialen Stirnseite mittels des jeweiligen Wickelkopfabschnittes (11) miteinander verbunden sind, wobei die beiden ersten Nutabschnitte (10) der jeweiligen ersten Spule (9) in unterschiedlichen Nuten (6) angeordnet sind, welche um eine Anzahl von Nuten (6) zu einander versetzt sind, wobei in den Nuten (6) des Mittelabschnittes (5) jeweils zwei, in radialer Richtung übereinander angeordnete erste Nutabschnitte (10) unterschiedlicher erster Spulen (9) angeordnet sind, wobei in den Nuten (6) des jeweiligen Randabschnittes (2, 3) jeweils ein erster Nutabschnitt (10) einer der ersten Spulen (9) angeordnet ist. Um ein Statorsegment, einen Stator bzw. eine elektrische Maschine der eingangs genannten Art derart weiterzubilden, dass die zuvor beschriebenen Nachteile des Standes der Technik überwunden werden, wird vorgeschlagen, die Spulen zweite Spulen (12) umfassen, welche jeweils das Segmentblechpaket (1) umschließen und welche jeweils einen zweiten Nutabschnitt (13), einen Rückenabschnitt (14) und zwei Radialabschnitte (15) aufweisen, wobei der Rückenabschnitt (14) der jeweiligen zweiten Spule (12) an der radialen Außenseite des Segmentblechpaketes (1) angeordnet ist, wobei der jeweilige, zweite Nutabschnitt (13) an der jeweiligen axialen Stirnseite mittels des jeweiligen Radialabschnittes (15) mit dem Rückenabschnitt (14) der jeweiligen zweiten Spule (12) verbunden ist, wobei der zweite Nutabschnitt (13) der jeweiligen zweiten Spule (12) in einer der Nuten (6) des jeweiligen Randabschnittes (2, 3) angeordnet ist.

## Beschreibung

Die Erfindung betrifft ein Statorsegment für einen hohlzylinderförmigen, segmentierten Stator einer elektrischen Maschine, wobei das Statorsegment ein Segmentblechpaket aufweisend einen ersten Randabschnitt und einen zweiten Randabschnitt, welcher jeweils an einer Segmentgrenze zum jeweils benachbarten Statorsegment angeordnet ist, und einen Mittelabschnitt, welcher zwischen dem ersten Randabschnitt und dem zweiten Randabschnitt angeordnet ist, sowie Spulen aufweist, welche jeweils zumindest einen Nutabschnitt aufweisen, wobei das Segmentblechpaket in axialer Richtung verlaufende und nach radial innen offene Nuten aufweist, welche in Umfangsrichtung versetzt zueinander angeordnet sind, wobei die jeweilige Nut derart ausgestaltet ist, dass in ihr zwei Nutabschnitte in radialer Richtung übereinander anordenbar sind, von denen der radial innen angeordnete Nutabschnitt als Oberstab und der radial außen angeordnete Nutabschnitt als Unterstab fungieren, wobei die Spulen erste Spulen umfassen, welche jeweils zwei erste Nutabschnitte und zwei Wickelkopfabschnitte aufweisen, wobei die beiden ersten Nutabschnitte der jeweiligen ersten Spule an der jeweiligen axialen Stirnseite mittels des jeweiligen Wickelkopfabschnittes miteinander verbunden sind, wobei die beiden ersten Nutabschnitte der jeweiligen ersten Spule in unterschiedlichen Nuten angeordnet sind, welche um eine Anzahl von Nuten zu einander versetzt sind, wobei in den Nuten des Mittelabschnittes jeweils zwei, in radialer Richtung übereinander angeordnete erste Nutabschnitte unterschiedlicher erster Spulen angeordnet sind, wobei in den Nuten des jeweiligen Randabschnittes jeweils ein erster Nutabschnitt einer der ersten Spulen angeordnet ist.

Außerdem betrifft die Erfindung einen hohlzylinderförmigen, segmentierten Stator für eine elektrische Maschine aufweisend zumindest zwei derartige Statorsegmente. Ferner betrifft die Erfindung eine derartige elektrische Maschine und schließlich eine Mühle oder einen Kompressor aufweisend eine derartige elektrische Maschine.

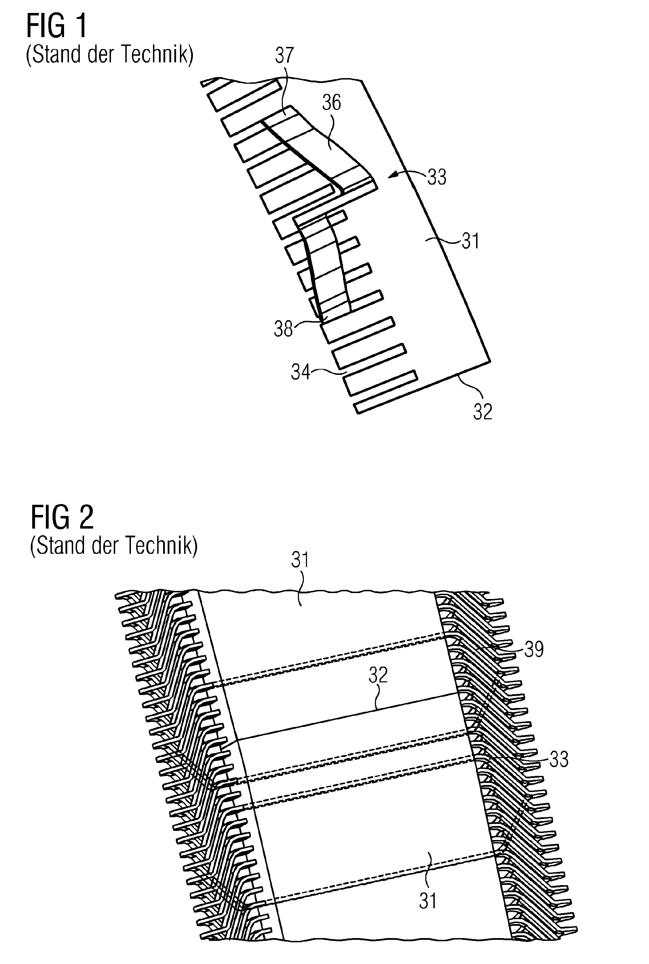

Statoren bzw. Ständer elektrischer Maschinen bestehen üblicherweise aus einem Blechpaket und einem stromführenden Ständerwicklungssystem, was im Folgenden im Zusammenhang mit den Figuren 1 bis 3 näher erläutert wird, wobei Figur 1 eine Ansicht in axialer Richtung und Figur 2 eine Ansicht von radial außen zeigt.

Das Blechpaket des Ständers ist, vor allem ab einer gewissen elektrischen Leistung, aus mehreren Segmentblechpaketen 31 aufgebaut, wobei zwei benachbarte Segmentblechpakete 31 an ihren jeweiligen Segmentgrenzen 32 aneinander anliegen. Die Wicklung setzt sich aus einer Vielzahl von Spulen 33, 39 beispielsweise wie in Figur 1 angedeutet in Form von gesehnten Zweischichtwicklungen, zusammen, wobei auch Stabwicklungen zum Einsatz kommen können. Jede Spule 33, 39 besteht aus parallel geführten Teilleitern, die in mehreren Schichten neben- und/oder übereinander angeordnet sind und die gegeneinander elektrisch isoliert sind. Die jeweilige Spule 33, 39 besitzt zwei Schaltenden, über welche die Spulen 33, 39 zu einem Wicklungssystem verbunden werden.

Ein beispielhaftes Wicklungssystem ist in Figur 2 dargestellt. Der Stator weist zwei an einer Segmentgrenze 32 aneinander anliegende Segmentblechpakete 31 auf, wobei segmentübergreifenden Spulen 39, beispielsweise in Form von den weiter unten erläuterten Klappspulen, eingesetzt werden. Weiterhin sind Spulen 33 vorgesehen, welche lediglich in einem der Segmentblechpakete 1 untergebracht sind.

Der in einer Nut 34 des Segmentblechpaketes 1 liegende Spulenabschnitt wird Nutseite bzw. Nutabschnitt 35, der dazwischen liegende Abschnitt Wickelkopf bzw. Wickelkopfabschnitt 36 genannt. In jeder Nut 34 liegen in radialer Richtung betrachtet zwei Nutseiten 35 unterschiedlicher Spulen 33 übereinander. Die im Nutgrund bzw. in der unteren Nuthälfte 37 liegende Nutseite 35 wird Unterstab, die am Nutausgang bzw. der oberen Nuthälfte 38 wird Oberstab bezeichnet. Üblicherweise werden die Nutseiten 35 einer Nut 34 durch einen Zwischenschieber separiert und wird die Nut 34 mit einem Keil verschlossen.

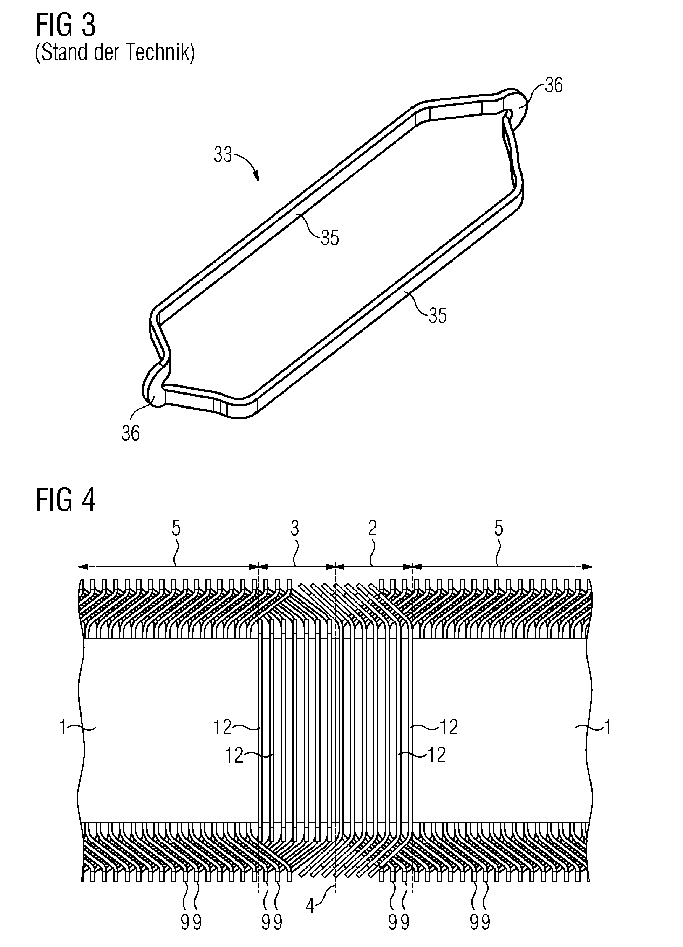

Diese schon kurz erläuterte Art der Spule ist in der Figur 3 dargestellt und ist als Zweischichtwicklung bekannt, wobei derartige Spulen 33 auch als Fassspulen und im vorliegenden Dokument als erste Spulen bezeichnet werden. Die jeweilige Spule 33 ist dabei derart ausgestaltet, dass eine der beiden Nutseiten 35 als Oberstab und die andere der beiden Nutseiten 35 als Unterstab fungieren, wie auch in Figur 1 ersichtlich ist, so dass die Zweischichtwicklung in Form einer Standard-Fassspule vorliegt.

Zum Herstellungsprozess des Ständers gehört das Imprägnieren der Wicklung mit Tränkharz. Dabei werden der Ständer und die Wicklung in einen Tränkkessel getaucht. Aufgrund der räumlichen Begrenzung der Tränkkesselgröße und der zu gewährleistenden Transportfähigkeit werden Ständer, deren Bohrungsdurchmesser eine kritische Größe überschreiten, segmentiert gebaut, wie dies z. B. Ringmotoren der Fall ist. Bei der segmentierten Bauweise wird das Ständerblechpaket in Form von Kreisringsegmenten gefertigt, die am Einsatzort der Maschine zusammengefügt werden. Die Anzahl der Segmente ist von der Größe der Maschine abhängig, wobei üblicherweise vier Segmente vorgesehen werden.

Für Ständer, welche in segmentierter Bauweise gefertigt werden, ist ein jeweiliges segmentierbares Wicklungssystem besonders wünschenswert. Segmentierbare Wicklung heißt an dieser Stelle, dass keine segmentübergreifenden Spulen für den Aufbau der Wicklung verwendet werden. Die Segmentierung des Wicklungssystems stellt ein technisches Problem dar.

Das Problem wird bisher umgangen, indem die segmentübergreifenden Spulen erst am Betriebsort der Maschine montiert werden. Diese Art von Spulen wird oftmals zumindest teilweise elastisch ausgeführt, um die Montage zu ermöglichen. Beispielsweise wird der Unterstab der jeweiligen segmentübergreifenden Spule in einem Statorsegment fertig montiert und die Segmente werden an den Betriebsort der Maschine transportiert. Bei der Endmontage wird schließlich der Oberstab der jeweiligen segmentübergreifenden Spule im jeweiligen, benachbarten Segment angeordnet, indem der jeweilige Oberstab in die vorgesehene Nut eingeklappt wird. Da zwischen zwei benachbarten Segmenten eine Fuge vorliegt, werden segmentübergreifenden Spulen auch Teilfugenspulen oder bei einer elastischen Ausführung auch Klappspulen genannt. Die Montage von Spulen außerhalb des Werks stellt allerdings einen erheblichen Mehraufwand und somit selbst wiederum ein erhebliches Problem dar.

Aus der DE 10 2011 088 660 A1 ist eine elektrische Maschine mit einem segmentierten Stator bekannt.

Ausgehend von den zuvor erläuterten Statorsegmenten, Statoren und elektrischen Maschinen ist es eine Aufgabe der Erfindung, ein Statorsegment, einen Stator bzw. eine elektrische Maschine der eingangs genannten Art derart weiterzubilden, dass die zuvor beschriebenen Nachteile des Standes der Technik überwunden werden.

Eine Lösung der Aufgabe ergibt sich für ein Statorsegment der eingangs genannten Art dadurch, dass die Spulen zweite Spulen umfassen, welche jeweils das Segmentblechpaket umschließen und welche jeweils einen zweiten Nutabschnitt, einen Rückenabschnitt und zwei Radialabschnitte aufweisen, wobei der Rückenabschnitt der jeweiligen zweiten Spule an der radialen Außenseite des Segmentblechpaketes angeordnet ist, wobei der jeweilige, zweite Nutabschnitt an der jeweiligen axialen Stirnseite mittels des jeweiligen Radialabschnittes mit dem Rückenabschnitt der jeweiligen zweiten Spule verbunden ist, wobei der zweite Nutabschnitt der jeweiligen zweiten Spule in einer der Nuten des jeweiligen Randabschnittes angeordnet ist.

Außerdem ergibt sich eine Lösung der Aufgabe für einen Stator der eingangs genannten Art dadurch, dass er zumindest zwei derartige Statorsegmente aufweist.

Ferner ergibt sich eine Lösung der Aufgabe für eine elektrische Maschine der eingangs genannten Art und schließlich für eine Mühle oder einen Kompressor der eingangs genannten Art dadurch, dass die elektrische Maschine einen derartigen Stator und/oder zumindest zwei derartige Statorsegmente aufweist bzw. die Mühle oder der Kompressor eine derartige elektrische Maschine aufweist.

Die ersten Spulen sind derart ausgestaltet, dass die beiden ersten Nutabschnitte der jeweiligen ersten Spule in unterschiedlichen Nuten untergebracht sind. Beispielsweise kann der jeweilige Radialabschnitt, welcher die beiden ersten Nutabschnitte der jeweiligen ersten Spule verbindet, abgekröpft ausgestaltet sein, um den Abstand in Umfangsrichtung zwischen den beiden Nuten zu überbrücken, in welchen die beiden ersten Nutabschnitte der jeweiligen ersten Spule angeordnet sind. Von der Achse nach radial außen betrachtet ist der Wickelkopfabschnitt der jeweiligen ersten Spule somit insbesondere im Wesentlichen V-förmig ausgestaltet, wobei das jeweilige V sich insbesondere aus zwei Z-förmigen Bögen zusammensetzt, die sich in Umfangsrichtung in entgegengesetzte Richtungen aufspannen. Somit sind die äußeren Stege des jeweiligen Z-förmigen Bogens im Wesentlichen parallel zueinander und in axialer Richtung ausgerichtet, wohingegen die beiden mittleren Stege der beiden Z-förmigen Bögen in Umfangsrichtung in zueinander entgegengesetzten Richtungen gebogen sind. Wie weiter oben schon erwähnt, werden die ersten Spulen auch als Zweischichtwicklung, insbesondere als gesehnte Zweischichtwicklung, bezeichnet.

Die beiden ersten Nutabschnitte der jeweiligen ersten Spule können dabei beide in Nuten des Mittelabschnittes angeordnet sein, wobei alternativ einer der beiden ersten Nutabschnitte im Mittelabschnitt und der andere der beiden Nutabschnitte der jeweiligen ersten Spule in einem der beiden Randabschnitte angeordnet sein kann.

Weiterhin sind zweite Spulen vorgesehen, welche auch als Toroidspulen bezeichnet werden und sich von den ersten Spulen insbesondere dadurch unterscheiden, dass sie lediglich einen Nutabschnitt, nämlich den jeweiligen zweiten Nutabschnitt, aufweisen. Dies geht damit einher, dass die jeweilige zweite Spule einen Rückenabschnitt aufweist, welcher an der radialen Außenseite des Segmentblechpaketes angeordnet ist, so dass die jeweilige zweite Spule das Segmentblechpaket umschließt. Die jeweilige Toroidspule umschließt das Segmentblechpaket somit in einer Ebene, welche von der axialen Richtung und einer radialen Richtung aufgespannt wird.

Dem vorgeschlagenen Statorsegment bzw. Stator liegen dabei insbesondere folgende Überlegungen zu Grunde.

Der Wickelkopf trägt nicht zur Drehmomentbildung bei. Er ist aber notwendig, um die Hinleiter mit den Rückleitern elektrisch zu verbinden. Liegt der Hinleiter unter einem magnetischen Nordpol, muss der Rückleiter etwa unter einem magnetischen Südpol liegen. Anderenfalls würden sich die Ströme aufheben, und das Gesamtdrehmoment wäre - zumindest theoretisch - Null.

Es ist möglich, ganz auf die drehmomentbildende Wirkung des Rückleiters zu verzichten. Der inaktive Rückleiter muss dann in einem Bereich des Maschinenquerschnitts auf die andere Maschinenseite zurückgeführt werden, wo er keine Drehmomentbildung zur Folge haben kann. Diese Forderung ist außerhalb des Ständerjochs erfüllt, wenn der Ständer außen liegt und den Läufer umschließt.

Dies wird insbesondere durch eine Anordnung von einer Spule bzw. mehreren Spulen erreicht, die toroidal um das Ständerjoch bzw. das Segmentblechpaket herum angeordnet ist bzw. sind. Diese grundsätzliche Wicklungsanordnung ist unter dem Begriff Toroidwicklung (englisch: "toroidal windings") bzw. Toroidspule bekannt. Sie wurde bei Kleinmaschinen untersucht, die entweder als Radialfluss- oder als Axialflussmaschinen ausgeführt sind und elektrische Leistungen erbringen können, welche um Größenordnungen kleiner als der vorgeschlagene Stator bzw. die vorgeschlagene elektrische Maschine sind. Gewöhnlich wird das Ständerjoch bei den genannten Kleinmaschinen direkt bewickelt, wie es auch bei Ringkerntransformatoren üblich ist.

Derartige Kleinmaschinen sind beispielsweise aus den folgenden Druckschriften bekannt: WO 99/019962 A1, US 4 563 606 A, EP 2 017 945 A1, US 4 103 197 A, EP 1 324 472 A2, WO 02/089291 A2, wobei dort teilweise auch ein Verguss des Stators beispielsweise mit Epoxidharz vorgesehen ist.

Aus den Dokumenten zum bisherigen Stand der Technik ist die Herstellung und Verwendung von Toroidspulen bei Großmaschinen, also insbesondere bei Statorsegmenten, Statoren bzw. elektrischen Maschinen mit einer elektrischen Leistung von zumindest 1 MW, nicht bekannt.

Vorteilhaft gegenüber klassischen, bei Großmaschinen bisher verwendeten Spulen ist die einfache Gestalt der Toroidspulen und besonders die Verwendung von Toroidspulen, um segmentübergreifende Spulen zu vermeiden. Sie werden beispielsweise um vier im Rechteck angeordnete Dorne gewickelt.

Insbesondere wenn der Läufer nicht durch die Ständerbohrung eingeführt werden soll oder kann, ist die Verwendung von Toroidspulen vorteilhaft, da dies für gewöhnlich eine Teilung des Jochs in mindestens zwei Segmente erfordert. Dies rührt daher, dass sich Toroidspulen für gewöhnlich nicht in ein geschlossenes Ständerjoch einlegen lassen.

Obwohl die vorgeschlagene Verwendung von Toroidspulen einige Vorteile bewirkt, treten auch einige Nachteile zu Tage. Beispielsweise ist zwar bei herkömmlichen, zweipoligen Maschinen bereits die inaktive Leiterlänge im Wickelkopf größer als die aktive Leiterlänge, so dass das Verhältnis der aktiven Leiterlänge zur gesamten Leiterlänge etwa 1,0 : 2,2 beträgt. Allerdings nimmt der magnetisch inaktive Leiteranteil bei Toroidspulen weiter zu. Das Verhältnis der aktiven Leiterlänge zur gesamten Leiterlänge liegt nunmehr etwa bei 1,0 : 2,5 bis 1,0 : 3,0. Daraus resultiert eine Erhöhung der Stromwärmeverluste. Eine Umsetzung bei einem speziellen Projekt hängt also maßgeblich von der Gewichtung der Forderungen und dem tatsächlichen Anteil der Stromwärmeverluste an den Gesamtverlusten ab.

Ein weiterer Nachteil ist die Vergrößerung des Ständeraußendurchmessers, die daher rührt, dass der Rückleiter an der radialen Außenseite des Segmentblechpaketes entlang geführt wird. Vorzugsweise wird bei der Konstruktion des Bereichs um den Ständer berücksichtigt, dass möglichst keine hochpermeablen, geschlossenen Wege geschaffen werden. Dadurch würde sich ein Streufluss ausbilden, der wiederum zur Erwärmung der konstruktiven Bauteile und einer Erhöhung der lastabhängigen Zusatzverluste führen würde. Weitere Verluste können bei Einschichtwicklungen durch einen größeren Feldoberwellenanteil entstehen.

Insgesamt weist das vorgeschlagene Statorsegment somit eine Art gemischte Wicklung auf, welche erste Spulen und zweite Spulen aufweist. Von Vorteil ist daran, dass eine Segmentierung des Ständerwicklungssystems ermöglicht wird, was von großem Nutzen für die Ständermontage ist. Dies erlaubt, eine problematische Spulenmontage außerhalb des Werks zu umgehen.

Dies wird insbesondere dadurch erreicht, dass segmentübergreifende Spulen vermieden werden. So sind beispielsweise die ersten Nutabschnitte der ersten Spulen, welche je nach Ausgestaltung teilweise eine beträchtliche Erstreckung in Umfangsrichtung erreichen können, jeweils vollständig in den Nuten eines Statorsegmentes angeordnet. In den Nuten des jeweiligen Randabschnittes sind neben den ersten Spulen, welche sich zum Mittelabschnitt desselben Statorsegmentes erstrecken, die zweiten Spulen vorgesehen. Da die zweiten Spulen jeweils nur einen zweiten Nutabschnitt aufweisen, wird somit eine Wicklung für das Statorsegment geschaffen, welche keine segmentübergreifenden Spulen aufweist. Beispielsweise kann der Rückenabschnitt der jeweiligen zweiten Spule in jenem Umfangsbereich an der radialen Außenseite desselben Segmentblechpaketes angeordnet werden, in welchem sich der jeweilige zweite Nutabschnitt befindet.

Das vorgeschlagene Statorsegment bzw. der vorgeschlagene ist insbesondere für elektrische Großmaschinen geeignet, da es bzw. er mit einer elektrischen Leistung von zumindest 1 MW betreibbar ist. Beispielsweise kann der Stator einen Innendurchmesser von zumindest 500 mm oder zumindest 1000 mm aufweisen. Die vorgeschlagene elektrische Maschine weist beispielsweise einen im Stator drehbar gelagerten Rotor auf, ist vorzugsweise eine rotatorische Maschine und kann beispielsweise als Windkraftgenerator oder Antriebsmotor, insbesondere Ringmotor, ausgestaltet sein. Insbesondere bei einem Einsatz des Stators bei einer Mühle oder einem Kompressor kann der Statorinnendurchmesser jedoch auch 3 m oder 5 m überschreiten, wobei der Stator dann beispielsweise mit einer elektrischen Leistung von mindestens 10 MW, teils mindestens 25 MW, betreibbar ist. Beispielsweise kann ein entsprechender Ringmotor einen Statorinnendurchmesser von etwa 15 m aufweisen.

Bei einer vorteilhaften Ausgestaltung der Erfindung sind zumindest zwei benachbarte erste Spulen, bei welchen jeweils beide erste Nutabschnitte in einer der Nuten des Mittelabschnittes angeordnet sind, jeweils in Umfangsrichtung um eine Nut versetzt zueinander angeordnet und derart ausgestaltet, dass sie eine im Wesentlichen identische Geometrie aufweisen und jeweils einer der beiden jeweiligen ersten Nutabschnitte als Oberstab und der andere der beiden jeweiligen ersten Nutabschnitte als Unterstab fungiert.

Somit sind im Mittelabschnitt zumindest zwei benachbarte erste Spulen angeordnet, bei welchen jeweils der eine erste Nutabschnitt als Oberstab und der andere erste Nutabschnitt als Unterstab fungiert. Oftmals werden solche erste Spulen auch als Standard-Fassspulen bezeichnet. Die zumindest zwei benachbarten ersten Spulen weisen dabei eine im Wesentlichen identische Geometrie auf und sind in Umfangsrichtung um eine Nut versetzt zueinander angeordnet. Dadurch wird eine Platz sparende Anordnung der jeweiligen Wickelkopfabschnitte erleichtert, welche gleichzeitig Kollisionen von Spulen im Wickelkopf vermeidet.

Bei einer weiteren vorteilhaften Ausgestaltung der Erfindung sind jene ersten Spulen, bei welchen jeweils ein erster Nutabschnitt in den Nuten des ersten Randabschnittes oder des zweiten Randabschnittes angeordnet ist, im Wesentlichen derart ausgestaltet sind, wie jene ersten Spulen, bei welchen jeweils beide erste Nutabschnitte in einer der Nuten des Mittelabschnittes angeordnet sind.

Um eine Platz sparende Anordnung der jeweiligen Wickelkopfabschnitte zu erleichtern und Kollisionen von Spulen im Wickelkopf zu vermeiden, werden jene ersten Spulen, bei welchen jeweils ein erster Nutabschnitt in den Nuten des ersten Randabschnittes oder des zweiten Randabschnittes angeordnet ist, im Wesentlichen gleich wie jene ersten Spulen ausgestaltet, bei welchen jeweils beide erste Nutabschnitte in den Nuten des Mittelabschnittes angeordnet sind.

Somit ist beispielsweise denkbar, dass alle erste Spulen gleich ausgestaltet sind, unabhängig davon, ob die jeweilige erste Spule vollständig im Mittelabschnitt oder teils im Mittelabschnitt und teils in einem der Randabschnitte angeordnet ist. Alternativ kann auch vorgesehen sein, dass nur jene ersten Spulen gleich ausgestaltet sind, die entweder vollständig im Mittelabschnitt angeordnet sind oder teils im Mittelabschnitt und teils in dem ersten Randabschnitt.

Vorzugsweise ist die jeweilige erste Spule dabei derart ausgestaltet, dass der eine erste Nutabschnitt als Oberstab und der andere erste Nutabschnitt der jeweiligen ersten Spule als Unterstab fungiert, so dass jeweils eine Standard-Fassspule vorliegt. Insgesamt können die ersten Spulen derart angeordnet werden, dass zwei benachbarte erste Spulen jeweils in Umfangsrichtung um eine Nut versetzt zueinander angeordnet sind.

Bei einer alternativen vorteilhaften Ausgestaltung der Erfindung sind jene ersten Spulen, bei welchen jeweils ein erster Nutabschnitt in den Nuten des zweiten Randabschnittes angeordnet ist, derart ausgestaltet, dass beide erste Nutabschnitte jeweils als Oberstab fungieren.

Die ersten Spulen, bei welchen beide erste Nutabschnitte entweder als Oberstab oder als Unterstab fungieren, werden auch als Gleichlage-Fassspulen bezeichnet. Die Verwendung von ersten Spulen, welche teils im Mittelabschnitt und teils im zweiten Randabschnitt angeordnet sind und deren beide erste Nutabschnitte als Oberstab fungieren, ermöglicht die Verwendung von zweiten Spulen im zweiten Randabschnitt, welche das Segmentblechpaket vergleichsweise eng umschließen, womit Material eingespart und die elektrische Verlustleistung verringert werden können. Dies wird dadurch erreicht, dass der jeweilige zweite Nutabschnitt als Unterstab fungiert, wodurch der jeweilige Radialabschnitt kürzer ausgeführt werden kann. Weiterhin erlaubt dies eine Platz sparende Anordnung der jeweiligen Radialabschnitte und Wickelkopfabschnitte, welche gleichzeitig Kollisionen von Spulen im Wickelkopf vermeidet.

Vorteilhafterweise sind die übrigen ersten Spulen als Standard-Fassspulen ausgestaltet, so dass die jeweiligen zweiten Nutabschnitte jener zweiten Spulen, welche im ersten Randabschnitt angeordnet sind, ebenfalls als Unterstab fungieren. Prinzipiell ist jedoch auch denkbar, jene ersten Spulen, bei welchen jeweils ein erster Nutabschnitt in den Nuten des ersten Randabschnittes angeordnet ist, derart ausgestaltet, dass beide erste Nutabschnitte als Unterstab fungieren.

Bei einer weiteren, alternativen vorteilhaften Ausgestaltung der Erfindung ist die jeweilige zweite Spule derart ausgestaltet, dass jener jeweilige zweite Nutabschnitt als Oberstab bzw. als Unterstab fungiert, welcher in einer der Nuten des ersten Randabschnittes bzw. des zweiten Randabschnittes angeordnet ist.

Eine derartige Ausgestaltung der jeweiligen zweiten Spulen ermöglicht insbesondere, gleichförmige erste Spulen zu verwenden, wobei die ersten Spulen insbesondere in Form von Standard-Fassspulen vorliegen, bei welchen jeweils der eine erste Nutabschnitt als Oberstab und der andere erste Nutabschnitt als Unterstab fungiert.

Bei einer weiteren vorteilhaften Ausgestaltung der Erfindung sind jene zweiten Spulen, deren jeweiliger zweiter Nutabschnitt als Unterstab fungiert, flach in einer Ebene ausgestaltet.

Jene zweiten Spulen, deren jeweiliger zweiter Nutabschnitt als Unterstab fungiert, können somit jeweils vergleichsweise kurze Radialabschnitte aufweisen, so dass sie das Segmentblechpaket vergleichsweise eng umschließen, womit Material eingespart und die elektrische Verlustleistung verringert werden können. Weiterhin erlaubt dies eine Platz sparende Anordnung der jeweiligen Radialabschnitte und Wickelkopfabschnitte, wobei gleichzeitig Kollisionen von Spulen im Wickelkopf vermieden werden. Die flache Ausgestaltung bedeutet dabei, dass die jeweilige zweite Spule beispielsweise flach auf eine ebene Fläche gelegt werden kann und dabei flächig aufliegt.

Bei einer weiteren, alternativen vorteilhaften Ausgestaltung der Erfindung sind jene zweiten Spulen, deren jeweiliger zweiter Nutabschnitt als Oberstab fungiert, derart doppel-V-förmig ausgestaltet, dass der jeweilige Radialabschnitt gegenüber dem jeweiligen Rückenabschnitt und dem jeweiligen zweiten Nutabschnitt angewinkelt ausgeführt ist.

Der jeweilige Rückenabschnitt und der jeweilige Nutabschnitt sind vorzugsweise im Wesentlichen an derselben Stelle in Umfangsrichtung angeordnet. Die jeweilige V-förmige Ausgestaltung kann man sich beispielsweise als eine Biegung des jeweiligen Radialabschnittes in Umfangsrichtung gegenüber dem jeweiligen Rückenabschnitt und dem jeweiligen Nutabschnitt vorstellen. Da beide Radialabschnitte an beiden axialen Stirnseiten derart V-förmig ausgestaltet sind bzw. gebogen sind, liegt somit in radialer Richtung betrachtet eine doppel-V-förmige Ausgestaltung der jeweiligen zweiten Spule vor.

Durch eine derartige Ausgestaltung jener zweiten Spulen, deren jeweiliger zweiter Nutabschnitt als Oberstab fungiert, wird Platz in axialer Verlängerung des jeweiligen zweiten Nutabschnittes freigehalten, welcher beispielsweise für die Wickelkopfabschnitte jener ersten Spulen zur Verfügung steht, welche teils im Mittelabschnitt und teils im jeweiligen Randabschnitt angeordnet sind.

Die beiden Radialabschnitte der jeweiligen zweiten Spule können dabei zur Segmentgrenze hin weisen bzw. gebogen sein, wobei vorteilhafterweise an dem jeweiligen, angrenzenden Randabschnitt des benachbarten Statorsegmentes zweite Spulen eingesetzt werden, deren jeweiliger zweiter Nutabschnitt als Unterstab ausgestaltet ist bzw. fungiert. Somit erfordern die zweiten Spulen des Nachbarsegmentes weniger Platz, welcher für die zweiten Spulen des betrachteten Statorsegmentes zur Verfügung steht.

Bei einer weiteren, alternativen vorteilhaften Ausgestaltung der Erfindung sind jene zweiten Spulen, deren jeweiliger zweiter Nutabschnitt als Oberstab fungiert, derart doppel-Z-förmig ausgestaltet, dass der jeweilige Radialabschnitt gegenüber dem jeweiligen Rückenabschnitt und dem jeweiligen zweiten Nutabschnitt abgekröpft ausgeführt ist.

Der jeweilige Radialabschnitt ist somit im Wesentlichen Z-förmig ausgestaltet, wobei die beiden äußeren Stege des Z im Wesentlichen parallel zueinander und somit in axialer Richtung ausgerichtet sind. Der mittlere Steg des Z ist hingegen in Umfangsrichtung gebogen, wodurch eine Art Ausweichbewegung in Umfangsrichtung realisiert wird. Die in radialer Richtung betrachtet doppel-Z-förmige Ausgestaltung der jeweiligen zweiten Spule wird dadurch erreicht, dass für den jeweiligen Radialabschnitt an der jeweiligen axialen Stirnseite jeweils eine Z-förmige Ausgestaltung vorgesehen ist.

Bei einer weiteren vorteilhaften Ausgestaltung der Erfindung sind jeweilige benachbarte zweite Spulen dabei derart ausgestaltet, dass die axiale Erstreckung des jeweiligen Radialabschnittes von der Segmentgrenze zum Mittelabschnitt hin zunimmt.

Dank dieser Ausgestaltung der jeweiligen zweiten Spulen können Material eingespart und die elektrische Verlustleistung verringert werden. Dies wird insbesondere dadurch ermöglicht, dass der Wickelkopfabschnitt der jeweiligen ersten Spule abgekröpft, d. h. von der Achse nach radial außen betrachtet im Wesentlichen V-förmig, ausgestaltet ist, so dass die im jeweiligen Randabschnitt angeordneten ersten Spulen insbesondere in der Nähe der Segmentgrenze vergleichsweise wenig Raum in axialer Verlängerung des jeweiligen erste Nutabschnitte für ihren jeweiligen Wickelkopfabschnitt benötigen. Dies erlaubt, die axiale Erstreckung des jeweiligen Radialabschnittes jener zweiten Spule besonders kurz auszugestalten, deren jeweiliger zweiter Nutabschnitt in einer Nut in der Nähe der Segmentgrenze angeordnet ist.

Grundsätzlich benötigen die ersten Spulen von der Segmentgrenze zum Mittelabschnitt hin mehr Raum in axialer Richtung für den jeweiligen Wickelkopfabschnitt, so dass die jeweilige zweite Spule entsprechend derart ausgestaltet ist, dass die axiale Erstreckung des jeweiligen Radialabschnittes von der Segmentgrenze zum Mittelabschnitt hin zunimmt.

Prinzipiell können die jeweiligen zweiten Spulen dabei flach, angewinkelt oder abgekröpft ausgeführt sein, wie weiter oben erläutert.

Im Folgenden wird die Erfindung anhand der in den Figuren dargestellten Ausführungsbeispiele näher beschrieben und erläutert. Es zeigen:
- FIG 1-3: Statorsegmente und Spulen gemäß dem Stand der Technik,
- FIG 4-6: ein erstes und ein zweites Ausführungsbeispiel des vorgeschlagenen Statorsegmentes,
- FIG 7-8: ein erstes und ein zweites Ausführungsbeispiel einer zweiten Spule,
- FIG 9: ein drittes und das zweite Ausführungsbeispiel des vorgeschlagenen Statorsegmentes,
- FIG 10-12: ein viertes und das zweite Ausführungsbeispiel des vorgeschlagenen Statorsegmentes,
- FIG 13: ein drittes Ausführungsbeispiel einer zweiten Spule,
- FIG 14-16: ein fünftes und das zweite Ausführungsbeispiel des vorgeschlagenen Statorsegmentes, und
- FIG 17 & 18: ein Ausführungsbeispiel einer ersten Spule.

Die Figuren 1 bis 3 zeigen Statorsegmente und Spulen gemäß dem Stand der Technik und wurden schon weiter oben erläutert.

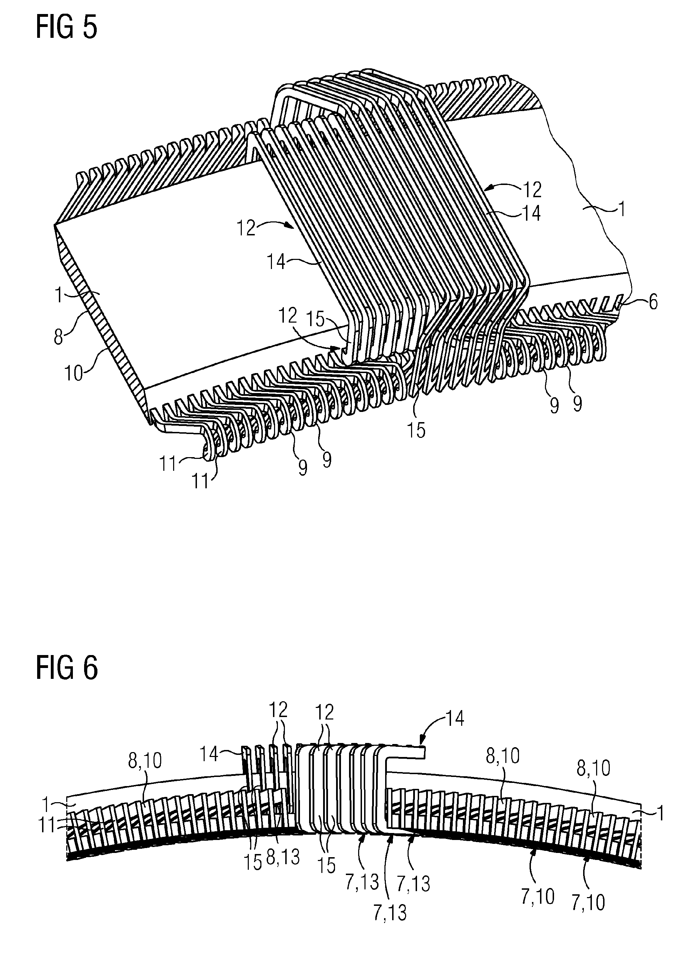

Die Figuren 4 bis 6 zeigen ein erstes und ein zweites Ausführungsbeispiel des vorgeschlagenen Statorsegmentes, wobei Figur 4 eine Ansicht von radial außen, Figur 5 eine perspektivische Ansicht von radial außen und Figur 6 eine Ansicht in axialer Richtung darstellen. Gleiche Bezugszeichen bezeichnen dabei gleiche Gegenstände.

Dargestellt sind jeweils Ausschnitte zweier benachbarter Statorsegmente, welche jeweils ein Segmentblechpaket 1 aufweisen, wobei die beiden Statorsegmentes an einer Segmentgrenze 4 aneinander anliegen. Das jeweilige Segmentblechpaket 1 weist dabei einen ersten Randabschnitt 2 und einen zweiten Randabschnitt 3 auf, welche jeweils an einer entsprechenden Segmentgrenze 4 zum jeweils benachbarten Statorsegment angeordnet ist. Weiterhin weist das jeweilige Segmentblechpaket 1 einen Mittelabschnitt 5 auf, welcher zwischen dem jeweiligen ersten Randabschnitt 2 und dem jeweiligen zweiten Randabschnitt 3 angeordnet ist. Das in den Figuren 4-6 rechts bzw. links dargestellte Segmentblechpaket 1 soll dabei zum ersten bzw. zweiten Ausführungsbeispiel des vorgeschlagenen Statorsegmentes gehören.

Das jeweilige Statorsegment verfügt weiterhin über mehrere Spulen, welche jeweils zumindest einen Nutabschnitt aufweisen und im Folgenden erläutert werden. Das jeweilige Segmentblechpaket 1 weist in axialer Richtung verlaufende und nach radial innen offene Nuten 6 auf, wie in Figur 5 angedeutet ist. Die Nuten 6 sind dabei in Umfangsrichtung versetzt zueinander angeordnet und derart ausgestaltet, in ihnen jeweils zwei Nutabschnitte in radialer Richtung übereinander anordenbar sind, von denen der radial innen angeordnete Nutabschnitt als Oberstab 7 und der radial außen angeordnete Nutabschnitt als Unterstab 8 fungieren.

Zu den genannten Spulen zählen erste Spulen 9, welche jeweils zwei erste Nutabschnitte 10 und zwei Wickelkopfabschnitte 11 aufweisen, wobei die beiden ersten Nutabschnitte 10 der jeweiligen ersten Spule 9 an der jeweiligen axialen Stirnseite mittels des jeweiligen Wickelkopfabschnittes 11 miteinander verbunden sind. Die beiden ersten Nutabschnitte 10 der jeweiligen ersten Spule 9 sind dabei in unterschiedlichen Nuten 6 angeordnet, welche um eine Anzahl von Nuten 6 zu einander versetzt sind. Im vorliegenden Ausführungsbeispiel liegen beispielsweise sechs Nuten 6 zwischen jenen Nuten 6, in welchen die beiden ersten Nutabschnitte 10 einer ersten Spule 9 liegen. In den Nuten 6 des Mittelabschnittes 5 sind dabei zwei, in radialer Richtung übereinander angeordnete erste Nutabschnitte 10 unterschiedlicher erster Spulen 9 angeordnet, wohingegen in den Nuten 6 des ersten Randabschnittes 2 oder des zweiten Randabschnittes 3 jeweils ein erster Nutabschnitt 10 einer der ersten Spulen 9 angeordnet ist.

Die jeweiligen ersten Spulen 9 sind dabei im Rahmen des Ausführungsbeispiels derart ausgeführt, dass jeweils einer der beiden ersten Nutabschnitte 10 als Oberstab 7 und der andere der beiden ersten Nutabschnitte 10 als Unterstab 8 fungieren, wie beispielsweise aus Figur 6 ersichtlich ist.

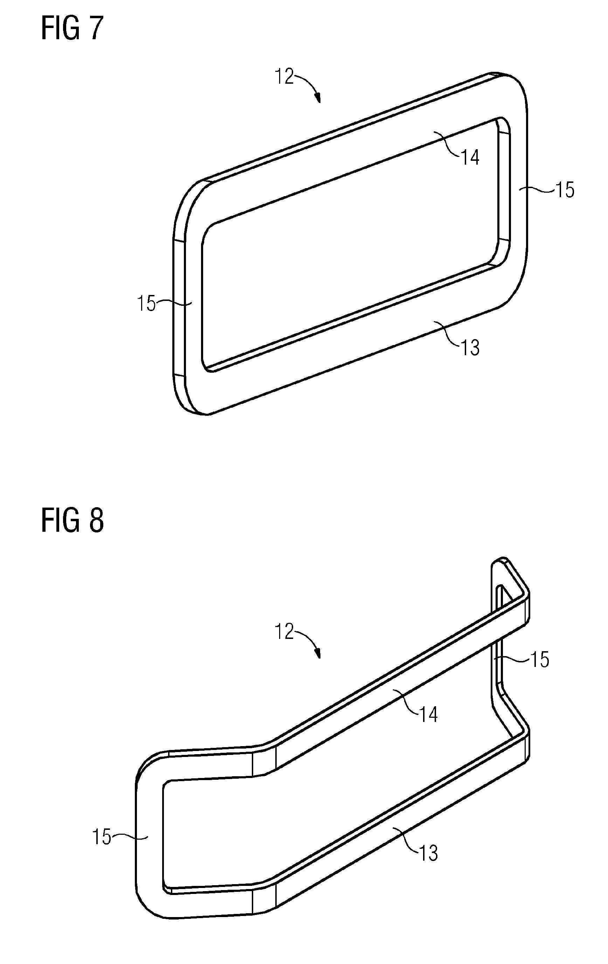

Zu den genannten Spulen zählen weiterhin zweite Spulen 12, welche jeweils das Segmentblechpaket 1 umschließen und welche jeweils einen zweiten Nutabschnitt 13, einen Rückenabschnitt 14 und zwei Radialabschnitte 15 aufweisen, was näher in den Figuren 7 und 8 dargestellt ist. Der jeweilige, zweite Nutabschnitt 13 ist an der jeweiligen axialen Stirnseite mittels des jeweiligen Radialabschnittes 15 mit dem Rückenabschnitt 14 der jeweiligen zweiten Spule 12 verbunden, wobei der Rückenabschnitt 14 der jeweiligen zweiten Spule 12 an der radialen Außenseite des Segmentblechpaketes 1 angeordnet ist. Der zweite Nutabschnitt 13 der jeweiligen zweiten Spule 12 ist in einer der Nuten 6 des ersten Randabschnittes 2 oder des zweiten Randabschnittes 3 angeordnet. Somit ist in den Nuten 6 des jeweiligen Randabschnittes 2 oder 3 jeweils ein erster Nutabschnitt 10 einer der ersten Spulen 9 sowie ein zweiter Nutabschnitt 13 einer der zweiten Spulen 12 angeordnet.

Im Rahmen des Ausführungsbeispiels sind diejenigen jeweiligen zweiten Spulen 12, deren jeweiliger zweiter Nutabschnitt 13 im ersten Randabschnitt 2 angeordnet sind, angewinkelt ausgeführt und diejenigen jeweiligen zweiten Spulen 12, deren jeweiliger zweiter Nutabschnitt 13 in zweiten Randabschnitt 3 angeordnet sind, flach ausgeführt. Der jeweilige zweite Nutabschnitt 13 der jeweiligen, angewinkelt bzw. flach ausgeführten zweiten Spule 12 fungiert dabei als Oberstab 7 bzw. Unterstab 8.

Die jeweiligen ersten Spulen 9 werden oftmals auch als Fassspulen, insbesondere Standard-Fassspulen, bezeichnet und sind beispielhaft auch in den Figuren 1-3 dargestellt und der zugehörigen Beschreibung weiter oben erläutert. Die jeweiligen zweiten Spulen 12 werden auch als Toroidspulen bezeichnet.

Die Figuren 7 und 8 zeigen ein erstes und ein zweites Ausführungsbeispiel einer zweiten Spule 12, wie sie beispielsweise beim oben erläuterten zweiten und ersten Ausführungsbeispiel des vorgeschlagenen Statorsegmentes zum Einsatz kommen. Wie schon erwähnt, werden die jeweiligen zweiten Spulen 12 auch als Toroidspulen bezeichnet.

Die jeweilige zweite Spule 12 weist einen zweiten Nutabschnitt 13 und einen Rückenabschnitt 14 sowie zwei Radialabschnitte 15 auf. Die jeweilige zweite Spule 12 wird derart in das jeweilige Segmentblechpaket 1 eingesetzt, dass der zweite Nutabschnitt 13 in einer der Nuten 6 und der Rückenabschnitt 14 an der radialen Außenseite des Segmentblechpaketes 1 angeordnet sind, so dass die jeweilige zweite Spule 12 das Segmentblechpaket 1 umschließt. Dabei ist bei der jeweiligen zweiten Spule 12 der zweite Nutabschnitt 13 an der jeweiligen axialen Stirnseite mittels des Radialabschnittes 15 mit dem Rückenabschnitt 14 verbunden.

Im Rahmen des Ausführungsbeispiels sind jene zweiten Spulen 12, deren jeweiliger zweiter Nutabschnitt 13 in einer der Nuten 6 des ersten Randabschnittes 2 bzw. des zweiten Randabschnittes 3 angeordnet sind, derart ausgestaltet, dass ihr jeweiliger zweiter Nutabschnitt 13 als Oberstab 7 bzw. Unterstab 8 fungiert.

Das erste Ausführungsbeispiel der zweiten Spule 12 gemäß Figur 7 ist dabei flach ausgestaltet, so dass sie sich im Wesentlichen in einer Ebene erstreckt. Das zweite Ausführungsbeispiel der zweiten Spule 12 gemäß Figur 8 ist doppel-V-förmig ausgestaltet, wobei der Radialabschnitt 15 gegenüber dem Rückenabschnitt 14 und dem Nutabschnitt 13 angewinkelt ausgeführt ist.

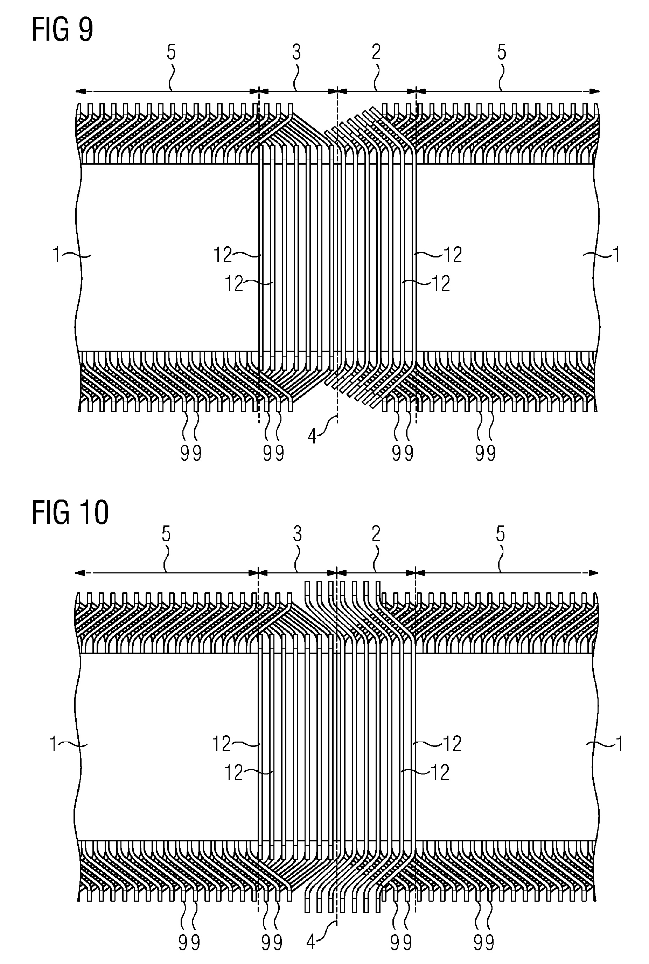

Die Figur 9 zeigt ein drittes und das zweite Ausführungsbeispiel des vorgeschlagenen Statorsegmentes, wobei die Ansicht jener der Figur 4 entspricht. Das rechts bzw. links dargestellte Segmentblechpaket 1 soll dabei zum dritten bzw. zweiten Ausführungsbeispiel des vorgeschlagenen Statorsegmentes gehören.

Ein Unterschied des dritten Ausführungsbeispiels zum ersten Ausführungsbeispiel liegt darin, dass die jeweilige zweite Spule 12, deren jeweiliger zweiter Nutabschnitt 13 in einer der Nuten 6 des ersten Randabschnittes 2 angeordnet ist, derart ausgestaltet ist, dass die axiale Erstreckung des jeweiligen Radialabschnittes 15 von der Segmentgrenze 4 zum Mittelabschnitt 5 hin zunimmt.

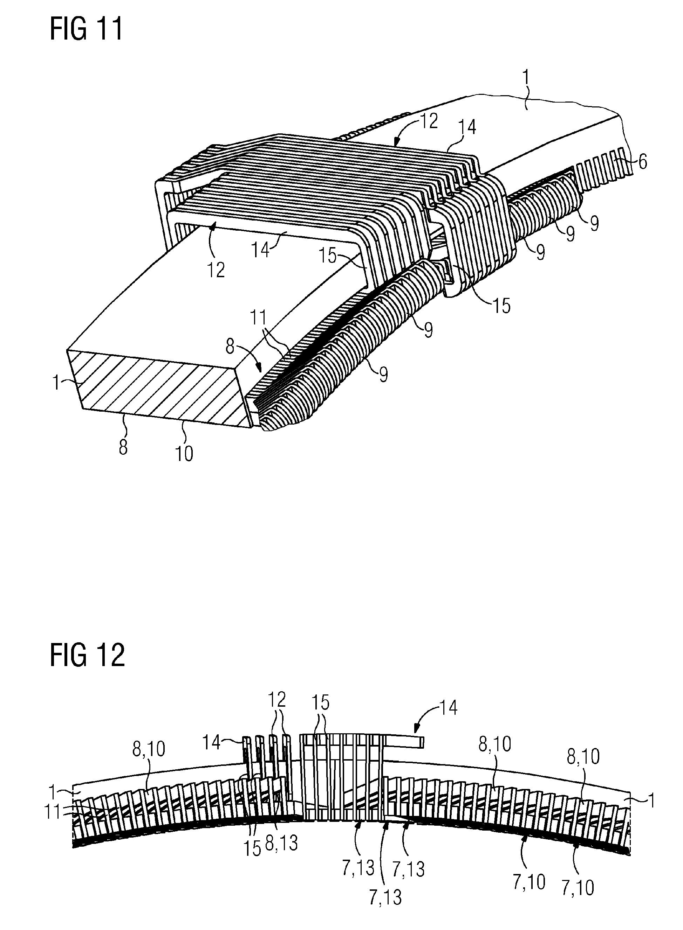

Die Figuren 9 bis 11 zeigen ein viertes und das zweite Ausführungsbeispiel des vorgeschlagenen Statorsegmentes, wobei die jeweilige Ansicht jener der Figuren 4 bis 6 entspricht. Das in den Figuren 9-11 rechts bzw. links dargestellte Segmentblechpaket 1 soll dabei zum vierten bzw. zweiten Ausführungsbeispiel des vorgeschlagenen Statorsegmentes gehören.

Ein Unterschied des vierten Ausführungsbeispiels zum ersten Ausführungsbeispiel liegt darin, dass die jeweilige zweite Spule 12, deren jeweiliger zweiter Nutabschnitt 13 in einer der Nuten 6 des ersten Randabschnittes 2 angeordnet ist, derart doppel-Z-förmig ausgestaltet ist , dass der Radialabschnitt 15 gegenüber dem Rückenabschnitt 14 und dem zweiten Nutabschnitt 13 abgekröpft ausgeführt ist.

Zusätzlich kann dabei vorgesehen sein, dass die axiale Erstreckung des jeweiligen, abgekröpft ausgestalteten Radialabschnittes 15 von der Segmentgrenze 4 zum Mittelabschnitt 5 in zunimmt.

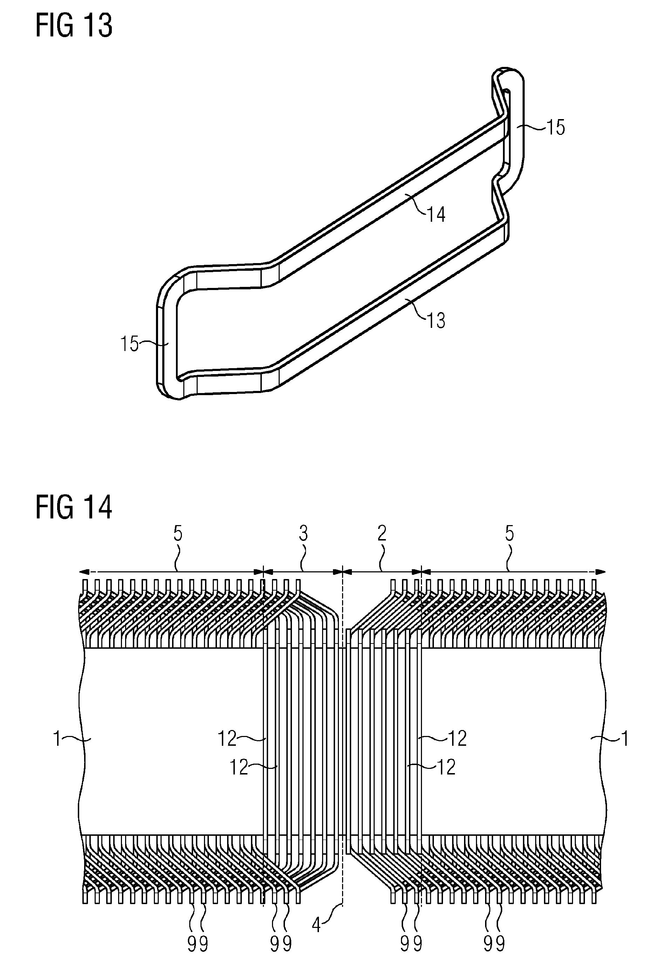

Die Figur 13 zeigt ein Ausführungsbeispiel einer zweiten Spule 12, wie sie beispielsweise beim oben erläuterten vierten Ausführungsbeispiel des vorgeschlagenen Statorsegmentes zum Einsatz kommt. Wie schon erwähnt, werden die jeweiligen zweiten Spulen 12 werden auch als Toroidspulen bezeichnet.

Die zweite Spule 12 ist gemäß ihrem dritten Ausführungsbeispiel derart doppel-Z-förmig ausgestaltet, dass der Radialabschnitt 15 gegenüber dem Rückenabschnitt 14 und dem zweiten Nutabschnitt 13 abgekröpft ausgeführt ist. Von radial innen oder radial außen betrachtet ist der jeweilige Radialabschnitt 15 somit im Wesentlichen Z-förmig ausgestaltet, wobei die beiden äußeren Stege das Z im Wesentlichen parallel zueinander und somit in axialer Richtung ausgerichtet sind. Hingegen ist der mittlere Steg des Z in Umfangsrichtung gebogen. Die doppel-Z-förmige Ausgestaltung der zweiten Spule wird somit dadurch erreicht, dass für den jeweiligen Radialabschnitt 15 an der jeweiligen axialen Stirnseite jeweils eine Z-förmige Ausgestaltung vorgesehen ist.

Zusätzlich kann dabei vorgesehen sein, dass die axiale Erstreckung der abgekröpft ausgestalteten Radialabschnitte 15 für mehrere zweite Spulen 12 von der Segmentgrenze 4 zum Mittelabschnitt 5 hin zunimmt.

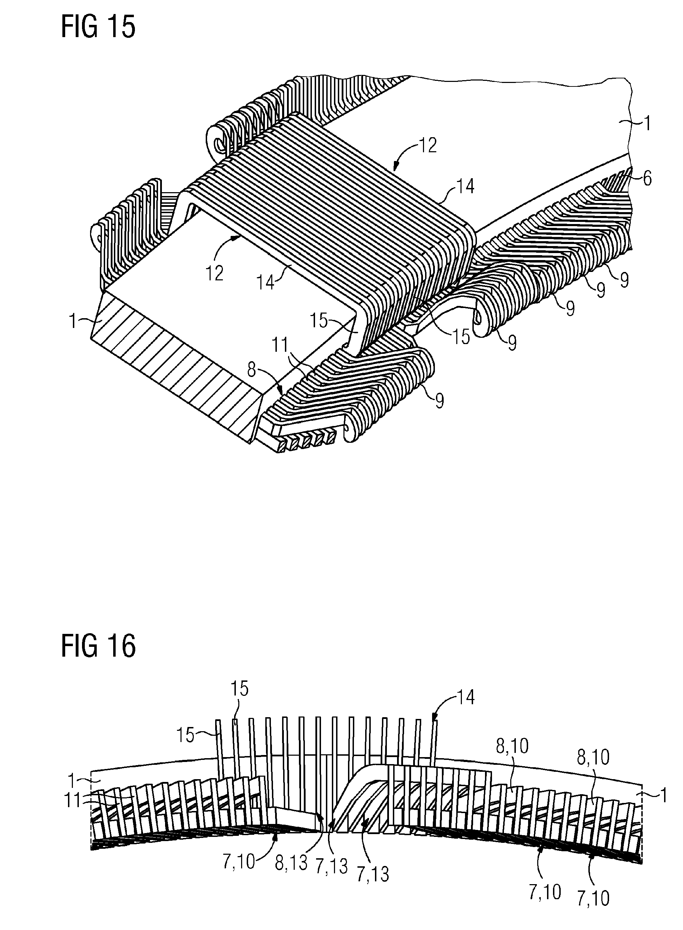

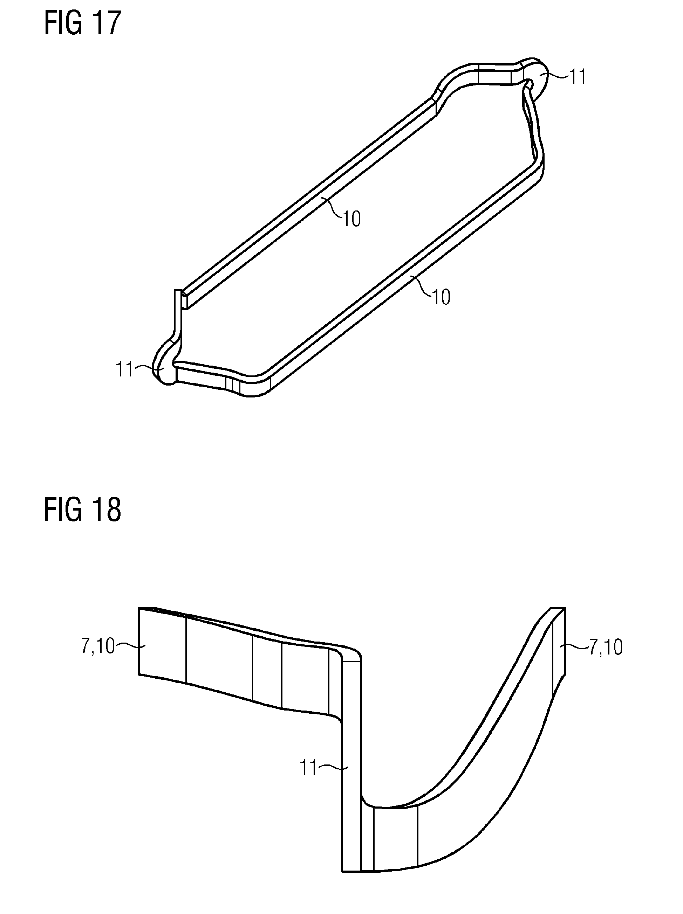

Die Figuren 14 bis 16 zeigen ein fünftes und das zweite Ausführungsbeispiel des vorgeschlagenen Statorsegmentes, wobei die jeweilige Ansicht jener der Figuren 4 bis 6 entspricht. Das in den Figuren 14-16 rechts bzw. links dargestellte Segmentblechpaket 1 soll dabei zum fünften bzw. zweiten Ausführungsbeispiel des vorgeschlagenen Statorsegmentes gehören. Ein Unterschied des fünften Ausführungsbeispiels zum ersten Ausführungsbeispiel liegt darin, dass die jeweilige erste Spule 9, deren jeweiliger erster Nutabschnitt 10 in einer der Nuten 6 des ersten Randabschnittes 2 angeordnet ist, derart ausgestaltet ist, dass beide erste Nutabschnitte 10 jeweils als Oberstab 7 fungieren. Derartige erste Spulen 9 werden auch als Gleichlage-Fassspulen bezeichnet und sind in den Figuren 17 und 18 näher dargestellt.

Ein weiterer Unterschied des fünften Ausführungsbeispiels zum ersten Ausführungsbeispiel liegt darin, dass die jeweilige zweite Spule 12, deren jeweiliger zweiter Nutabschnitt 13 in einer der Nuten 6 des ersten Randabschnittes 2 angeordnet ist, derart ausgestaltet ist, dass ihr jeweiliger zweiter Nutabschnitt 13 jeweils als Unterstab 8 fungiert.

Die Figuren 17 und 18 zeigen ein Ausführungsbeispiel einer ersten Spule 9, wie sie beispielsweise beim oben erläuterten fünften Ausführungsbeispiel des vorgeschlagenen Statorsegmentes zum Einsatz kommt. Wie schon erwähnt, werden derartige erste Spulen 9 auch als Gleichlage-Fassspulen bezeichnet.

Die erste Spule 9 gemäß dem Ausführungsbeispiel ist derart ausgestaltet, dass beide erste Nutabschnitte 10 jeweils als Oberstab 7 fungieren.

Zusammenfassend betrifft die Erfindung ein Statorsegment für einen hohlzylinderförmigen, segmentierten Stator einer elektrischen Maschine, wobei das Statorsegment ein Segmentblechpaket aufweisend einen ersten Randabschnitt und einen zweiten Randabschnitt, welcher jeweils an einer Segmentgrenze zum jeweils benachbarten Statorsegment angeordnet ist, und einen Mittelabschnitt, welcher zwischen dem ersten Randabschnitt und dem zweiten Randabschnitt angeordnet ist, sowie Spulen aufweist, welche jeweils zumindest einen Nutabschnitt aufweisen, wobei das Segmentblechpaket in axialer Richtung verlaufende und nach radial innen offene Nuten aufweist, welche in Umfangsrichtung versetzt zueinander angeordnet sind, wobei die jeweilige Nut derart ausgestaltet ist, dass in ihr zwei Nutabschnitte in radialer Richtung übereinander anordenbar sind, von denen der radial innen angeordnete Nutabschnitt als Oberstab und der radial außen angeordnete Nutabschnitt als Unterstab fungieren, wobei die Spulen erste Spulen umfassen, welche jeweils zwei erste Nutabschnitte und zwei Wickelkopfabschnitte aufweisen, wobei die beiden ersten Nutabschnitte der jeweiligen ersten Spule an der jeweiligen axialen Stirnseite mittels des jeweiligen Wickelkopfabschnittes miteinander verbunden sind, wobei die beiden ersten Nutabschnitte der jeweiligen ersten Spule in unterschiedlichen Nuten angeordnet sind, welche um eine Anzahl von Nuten zu einander versetzt sind, wobei in den Nuten des Mittelabschnittes jeweils zwei, in radialer Richtung übereinander angeordnete erste Nutabschnitte unterschiedlicher erster Spulen angeordnet sind, wobei in den Nuten des jeweiligen Randabschnittes jeweils ein erster Nutabschnitt einer der ersten Spulen angeordnet ist.

Außerdem betrifft die Erfindung einen hohlzylinderförmigen, segmentierten Stator für eine elektrische Maschine aufweisend zumindest zwei derartige Statorsegmente. Ferner betrifft die Erfindung eine derartige elektrische Maschine und schließlich eine Mühle oder einen Kompressor aufweisend eine derartige elektrische Maschine.

Um ein Statorsegment, einen Stator bzw. eine elektrische Maschine der eingangs genannten Art derart weiterzubilden, dass die zuvor beschriebenen Nachteile des Standes der Technik überwunden werden, wird vorgeschlagen, dass die Spulen zweite Spulen umfassen, welche jeweils das Segmentblechpaket umschließen und welche jeweils einen zweiten Nutabschnitt, einen Rückenabschnitt und zwei Radialabschnitte aufweisen, wobei der Rückenabschnitt der jeweiligen zweiten Spule an der radialen Außenseite des Segmentblechpaketes angeordnet ist, wobei der jeweilige, zweite Nutabschnitt an der jeweiligen axialen Stirnseite mittels des jeweiligen Radialabschnittes mit dem Rückenabschnitt der jeweiligen zweiten Spule verbunden ist, wobei der zweite Nutabschnitt der jeweiligen zweiten Spule in einer der Nuten des jeweiligen Randabschnittes angeordnet ist.

Außerdem wird ein Stator aufweisend zumindest zwei derartige Statorsegmente vorgeschlagen. Ferner wird eine elektrische Maschine aufweisend einen derartigen Stator und/oder zumindest zwei derartige Statorsegmente bzw. die Mühle oder der Kompressor aufweisend eine derartige elektrische Maschine vorgeschlagen.

## Patentansprüche

1. Statorsegment für einen hohlzylinderförmigen, segmentierten Stator einer elektrischen Maschine, wobei das Statorsegment aufweist:
- ein Segmentblechpaket (1) aufweisend einen ersten Randabschnitt (2) und einen zweiten Randabschnitt (3), welcher jeweils an einer Segmentgrenze (4) zum jeweils benachbarten Statorsegment angeordnet ist, und einen Mittelabschnitt (5), welcher zwischen dem ersten Randabschnitt (2) und dem zweiten Randabschnitt (3) angeordnet ist, und
- Spulen, welche jeweils zumindest einen Nutabschnitt aufweisen,
wobei das Segmentblechpaket (1) in axialer Richtung verlaufende und nach radial innen offene Nuten (6) aufweist, welche in Umfangsrichtung versetzt zueinander angeordnet sind,
wobei die jeweilige Nut (6) derart ausgestaltet ist, dass in ihr zwei Nutabschnitte in radialer Richtung übereinander anordenbar sind, von denen der radial innen angeordnete Nutabschnitt als Oberstab (7) und der radial außen angeordnete Nutabschnitt als Unterstab (8) fungieren,
wobei die Spulen erste Spulen (9) umfassen, welche jeweils zwei erste Nutabschnitte (10) und zwei Wickelkopfabschnitte (11) aufweisen,
wobei die beiden ersten Nutabschnitte (10) der jeweiligen ersten Spule (9) an der jeweiligen axialen Stirnseite mittels des jeweiligen Wickelkopfabschnittes (11) miteinander verbunden sind,
wobei die beiden ersten Nutabschnitte (10) der jeweiligen ersten Spule (9) in unterschiedlichen Nuten (6) angeordnet sind, welche um eine Anzahl von Nuten (6) zu einander versetzt sind,
wobei in den Nuten (6) des Mittelabschnittes (5) jeweils zwei, in radialer Richtung übereinander angeordnete erste Nutabschnitte (10) unterschiedlicher erster Spulen (9) angeordnet sind,
wobei in den Nuten (6) des jeweiligen Randabschnittes (2, 3) jeweils ein erster Nutabschnitt (10) einer der ersten Spulen (9) angeordnet ist,
**dadurch gekennzeichnet, dass**
die Spulen zweite Spulen (12) umfassen, welche jeweils das Segmentblechpaket (1) umschließen und welche jeweils einen zweiten Nutabschnitt (13), einen Rückenabschnitt (14) und zwei Radialabschnitte (15) aufweisen,
wobei der Rückenabschnitt (14) der jeweiligen zweiten Spule (12) an der radialen Außenseite des Segmentblechpaketes (1) angeordnet ist,
wobei der jeweilige, zweite Nutabschnitt (13) an der jeweiligen axialen Stirnseite mittels des jeweiligen Radialabschnittes (15) mit dem Rückenabschnitt (14) der jeweiligen zweiten Spule (12) verbunden ist,
wobei der zweite Nutabschnitt (13) der jeweiligen zweiten Spule (12) in einer der Nuten (6) des jeweiligen Randabschnittes (2, 3) angeordnet ist.

2. Statorsegment nach Anspruch 1,
wobei zumindest zwei benachbarte erste Spulen (9), bei welchen jeweils beide erste Nutabschnitte (10) in einer der Nuten (6) des Mittelabschnittes (5) angeordnet sind, jeweils in Umfangsrichtung um eine Nut (6) versetzt zueinander angeordnet sind und derart ausgestaltet sind, dass
- sie eine im Wesentlichen identische Geometrie aufweisen und
- jeweils einer der beiden jeweiligen ersten Nutabschnitte (10) als Oberstab (7) und der andere der beiden jeweiligen ersten Nutabschnitte (10) als Unterstab (8) fungiert.

3. Statorsegment nach einem der vorhergehenden Ansprüche, wobei jene ersten Spulen (9), bei welchen jeweils ein erster Nutabschnitt (10) in den Nuten (6) des ersten Randabschnittes (2) oder des zweiten Randabschnittes (3) angeordnet ist, im Wesentlichen derart ausgestaltet sind, wie jene ersten Spulen (9), bei welchen jeweils beide erste Nutabschnitte (10) in einer der Nuten (6) des Mittelabschnittes (5) angeordnet sind.

4. Statorsegment nach einem der Ansprüche 1-2,
wobei jene ersten Spulen (9), bei welchen jeweils ein erster Nutabschnitt (10) in den Nuten (6) des zweiten Randabschnittes (3) angeordnet ist, derart ausgestaltet sind, dass beide erste Nutabschnitte (10) jeweils als Oberstab (7) fungieren.

5. Statorsegment nach einem der Ansprüche 1-3,
wobei die jeweilige zweite Spule (12) derart ausgestaltet ist, dass jener jeweilige zweite Nutabschnitt (13) als Oberstab (7) bzw. als Unterstab (8) fungiert, welcher in einer der Nuten (6) des ersten Randabschnittes (2) bzw. des zweiten Randabschnittes (3) angeordnet ist.

6. Statorsegment nach einem der vorhergehenden Ansprüche,
wobei jene zweiten Spulen (12), deren jeweiliger zweiter Nutabschnitt (13) als Unterstab (8) fungiert, flach in einer Ebene ausgestaltet sind.

7. Statorsegment nach einem der Ansprüche 1-3,
wobei jene zweiten Spulen (12), deren jeweiliger zweiter Nutabschnitt (13) als Oberstab (7) fungiert, derart doppel-V-förmig ausgestaltet sind, dass der jeweilige Radialabschnitt (15) gegenüber dem jeweiligen Rückenabschnitt (14) und dem jeweiligen zweiten Nutabschnitt (13) angewinkelt ausgeführt ist.

8. Statorsegment nach einem der Ansprüche 1-3,
wobei jene zweiten Spulen (12), deren jeweiliger zweiter Nutabschnitt (13) als Oberstab (7) fungiert, derart doppel-Z-förmig ausgestaltet sind, dass der jeweilige Radialabschnitt (15) gegenüber dem jeweiligen Rückenabschnitt (14) und dem jeweiligen zweiten Nutabschnitt (13) abgekröpft ausgeführt ist.

9. Statorsegment nach Anspruch 7 oder 8,
wobei jeweilige benachbarte zweite Spulen (12) derart ausgestaltet sind, dass die axiale Erstreckung des jeweiligen Radialabschnittes (15) von der Segmentgrenze (4) zum Mittelabschnitt (5) hin zunimmt.

10. Hohlzylinderförmiger, segmentierter Stator für eine elektrische Maschine aufweisend zumindest zwei Statorsegmente nach einem der vorhergehenden Ansprüche.

11. Elektrischen Maschine aufweisend einen Stator nach Anspruch 10 und/oder zumindest zwei Statorsegmente nach einem der Ansprüche 1-9.

12. Mühle oder Kompressor aufweisend eine elektrische Maschine nach Anspruch 11.
